(19) Europäisches Patentamt
European Patent Office
Office européen des brevets

(11) EP 4 596 130 A1

(12) **EUROPEAN PATENT APPLICATION**
published in accordance with Art. 153(4) EPC

(43) Date of publication:
06.08.2025 Bulletin 2025/32

(21) Application number: 23891154.9

(22) Date of filing: 15.09.2023

(51) International Patent Classification (IPC):
**B21B 15/00** (2006.01)  **B21B 1/02** (2006.01)
**B21B 37/00** (2006.01)

(52) Cooperative Patent Classification (CPC):
**B21B 1/02; B21B 15/00; B21B 37/00**

(86) International application number:
**PCT/JP2023/033757**

(87) International publication number:
**WO 2024/105996 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 15.11.2022 JP 2022182237

(71) Applicant: JFE Steel Corporation
Tokyo 100-0011 (JP)

(72) Inventors:
• **HINATA, Kosuke**
**Tokyo 100-0011 (JP)**
• **SATO, Shusuke**
**Tokyo 100-0011 (JP)**
• **TAKASHIMA, Yukio**
**Tokyo 100-0011 (JP)**

(74) Representative: **Haseltine Lake Kempner LLP**
**Bürkleinstrasse 10**
**80538 München (DE)**

(54) **METHOD FOR PREDICTING WIDTH OF ROUGH ROLLED MATERIAL, METHOD FOR CONTROLLING WIDTH OF ROUGH ROLLED MATERIAL, METHOD FOR PRODUCING HOT-ROLLED STEEL SHEET, AND METHOD FOR GENERATING WIDTH PREDICTION MODEL FOR ROUGH ROLLED MATERIAL**

(57) A width prediction method of a rough rolled material according to the present invention is a width prediction method of a rough rolled material, which predicts a width of the rough rolled material in a hot rolling line including a heating furnace configured to heat a slab, a width reduction pressing device configured to intermittently perform width reduction on the heated slab, a rough rolling mill configured to manufacture the rough rolled material by performing rough rolling on the slab after the width reduction, and a finish rolling mill configured to manufacture a hot-rolled steel sheet by performing finish rolling on the rough rolled material, the width prediction method including a step of predicting a width distribution in a longitudinal direction of the rough rolled material by using a width prediction model learned by machine learning which includes, as input data, one or more operational parameters selected from operational parameters of the width reduction pressing device and one or more operational parameters selected from operational parameters of the rough rolling mill and uses, as output data, information on the width distribution in the longitudinal direction of the rough rolled material.

FIG.12

## Description

Field

The present invention relates to a width prediction method of a rough rolled material, a width control method of the rough rolled material, a manufacturing method of a hot-rolled steel sheet, and a generation method of a width prediction model of the rough rolled material in a hot rolling line.

Background

In a hot rolling line, first, a slab which is a steel piece material is heated by a heating furnace, the width of the slab is adjusted by a width reduction pressing device (sizing press), and a semi-finished steel sheet called a rough bar (rough rolled material) having a sheet thickness of about 30 to 50 mm is manufactured by rough rolling using one or two or more rough rolling mills. Next, leading and trailing end portions of the rough bar are cut with a crop shear, and then the rough bar is finish rolled with a 5 to 7 stand finish rolling mill capable of continuous rolling to manufacture a steel strip having a sheet thickness of about 1.0 to 25.0 mm. Finally, the steel strip in a high temperature state is cooled by a cooling device of a run-out table and then wound up by a coiler (winding machine) into a hot-rolled steel strip. In the hot rolling line, since plastic deformation in a thickness direction and a width direction of the steel sheet is imparted in the width reduction pressing device, the rough rolling mill, and the finish rolling mill, the width of the steel sheet complicatedly varies in the manufacturing processing of the hot-rolled steel strip. On the other hand, the width accuracy of the hot-rolled steel strip directly affects the product yield. Therefore, in the hot rolling line, the width of the steel sheet at a stage before the rough rolling is completed and the steel sheet is loaded into the finish rolling mill is controlled (rough width control), and the width of the steel sheet is controlled (finish width control) in the process of passing through the finish rolling mill.

In the hot rolling line, since the width of the steel sheet is changed due to various factors, various techniques for improving the width accuracy of the hot-rolled steel strip have been proposed. For example, Patent Literature 1 discloses a method of predicting a width change amount in finish rolling at a skid mark portion from a measurement result of a temperature distribution in a rolling direction of a rolled material or variation in a rolling load of a rough rolling mill. In addition, Patent Literature 2 discloses a method of forming a plurality of step portions from a leading end portion and a trailing end portion of the steel sheet toward a steady portion by a width reduction pressing device in order to suppress width variation at the leading end and the trailing end of the steel sheet. In addition, Patent Literature 3 discloses a method of predicting the variation in the width of the steel sheet after horizontal rolling by learning a relationship between the actual values of operational conditions of the vertical rolling mill (edger) and horizontal rolling mill, which constitute the rough rolling mill, and the actual value of the width of the steel sheet after the horizontal rolling, and of setting an opening degree of the vertical rolling mill such that the difference between the predicted value and the actual value of the width of the steel sheet after horizontal rolling becomes zero.

Citation List

Patent Literature

Patent Literature 1: JP 2968647 B2
Patent Literature 2: JP H05-200411 A
Patent Literature 3: JP 3260616 B2

Summary

Technical Problem

The method disclosed in Patent Literature 1 predicts the width change amount in the finish rolling mill that occurs due to the temperature distribution in the rolling direction of the rolled material generated in the heating furnace, but the length and width of the rolled material is changed due to width reduction, rough rolling, or the like. Therefore, it is necessary to specify which position of the rolled material the temperature distribution generated in the heating furnace corresponds to. However, since the length of the rolled material is extended by about 5 to 10 times until the slab becomes a rough rolled material, it is difficult to accurately track the temperature distribution generated in the heating furnace. Therefore, it is difficult to accurately predict the width change amount to suppress the occurrence of the width defect of the hot-rolled steel sheet.

On the other hand, in the method disclosed in Patent Literature 2, the width variation in the leading end portion and the trailing end portion of the steel sheet is suppressed using the width reduction pressing device, but it is difficult to accurately predict the complicated metal flow in the leading end portion and the trailing end portion of the steel sheet and form the step portion corresponding thereto. Therefore, the width of the steel sheet varies, and the width defect of the hot-rolled steel sheet may occur. In addition, Patent Literature 3 discloses that the variation in the width of the steel sheet after the horizontal rolling is predicted by learning using the actual values of operational conditions of the vertical rolling mill and the horizontal rolling mill. However, a width distribution of the steel sheet in a longitudinal direction is affected not only by the operational conditions in the rough rolling but also by the temperature distribution of the slab generated in the heating furnace and the width variation by the width reduction pressing device. Therefore, it is difficult to accurately predict the variation in the width of the steel sheet after the horizontal rolling.

The present invention has been made to solve the above problems, and an object thereof is to provide a width prediction method of a rough rolled material capable of accurately predicting a width distribution in a longitudinal direction of the rough rolled material. In addition, another object of the present invention is to provide a width control method of the rough rolled material capable of accurately controlling the width in the longitudinal direction of the rough rolled material. In addition, another object of the present invention is to provide a manufacturing method of a hot-rolled steel sheet capable of manufacturing the hot-rolled steel sheet having excellent width accuracy in the longitudinal direction. In addition, another object of the present invention is to provide a generation method of a width prediction model of the rough rolled material capable of generating the width prediction model that accurately predicts the width distribution in the longitudinal direction of the rough rolled material.

Solution to Problem

To solve the problem and achieve the object, a width prediction method of a rough rolled material, according to the present invention, is the method which predicts a width of the rough rolled material in a hot rolling line including a heating furnace configured to heat a slab, a width reduction pressing device configured to intermittently perform width reduction on the heated slab, a rough rolling mill configured to manufacture the rough rolled material by performing rough rolling on the slab after the width reduction, and a finish rolling mill configured to manufacture a hot-rolled steel sheet by performing finish rolling on the rough rolled material. The width prediction method includes: a step of predicting a width distribution in a longitudinal direction of the rough rolled material by using a width prediction model learned by machine learning, the width prediction model for which an input data is data including one or more operational parameters selected from operational parameters of the width reduction pressing device and one or more operational parameters selected from operational parameters of the rough rolling mill, and an output data is information on the width distribution in the longitudinal direction of the rough rolled material.

Moreover, the operational parameter of the width reduction pressing device and the operational parameter of the rough rolling mill may be operational parameters specified as representative values in the longitudinal direction of the rough rolled material.

Moreover, the width prediction model may include, as the input data, one or more operational parameters selected from operational parameters of the heating furnace.

Moreover, the width prediction model may include, as the input data, one or more attribute parameters selected from attribute information of the slab.

Moreover, a width control method of a rough rolled material, according to the present invention, is the width control method including: predicting the width distribution in the longitudinal direction of the rough rolled material by using the width prediction method of the rough rolled material according to the present invention, and setting the operational parameters of the rough rolling mill on the basis of the predicted width distribution.

Moreover, a manufacturing method of a hot-rolled steel sheet, according to the present invention, is the manufacturing method including: manufacturing the hot-rolled steel sheet by performing finish rolling using the finish rolling mill on the rough rolled material of which the width is controlled by the width control method of the rough rolled material according to the present invention.

Moreover, a generation method of a width prediction model of a rough rolled material, according to the present invention, is the method which generates a width prediction model of predicting a width of the rough rolled material in a hot rolling line including a heating furnace configured to heat a slab, a width reduction pressing device configured to intermittently perform width reduction on the heated slab, a rough rolling mill configured to manufacture the rough rolled material by performing rough rolling on the slab after the width reduction, and a finish rolling mill configured to manufacture a hot-rolled steel sheet by performing finish rolling on the rough rolled material. The generation method includes: a width prediction model generating step of acquiring a plurality of pieces of learning data, in which one or more pieces of operational performance data selected from operational parameters of the width reduction pressing device and one or more pieces of operational performance data selected from operational parameters of the rough rolling mill are included as input performance data, and information on a width distribution in a longitudinal direction of the rough rolled material is output performance data, and generating the width prediction model by machine learning using the plurality of pieces of acquired learning data.

Advantageous Effects of Invention

With the width prediction method of the rough rolled material according to the present invention, it is possible to accurately predict the width distribution in the longitudinal direction of the rough rolled material. In addition, with the width control method of the rough rolled material according to the present invention, it is possible to accurately control the width in the longitudinal direction of the rough rolled material. In addition, with the manufacturing method of the hot-rolled steel sheet according to the present invention, it is possible to manufacture the hot-rolled steel sheet having excellent width accuracy in the longitudinal direction. In addition, with the generation method of the width prediction model of the rough rolled material according to the present invention, it is possible to generate the width prediction model that accurately predicts the width distribution in the longitudinal direction of the rough rolled material.

Brief Description of Drawings

FIG. 1 is a schematic diagram illustrating a configuration example of a hot rolling line to which the present invention is applied.
FIG. 2 is a schematic diagram illustrating a configuration example of a heating furnace illustrated in FIG. 1.
FIG. 3 is a schematic diagram of the inside of the heating furnace illustrated in FIG. 1 as viewed from above.
FIG. 4 is a schematic diagram illustrating a configuration example of a width reduction pressing device illustrated in FIG. 1.
FIG. 5 is a diagram illustrating a configuration of a stand constituting a rough rolling mill illustrated in FIG. 1.
FIG. 6 is a schematic diagram for describing an optical width measurement method.
FIG. 7 is a block diagram illustrating a configuration of a width prediction model generation unit according to an embodiment of the present invention.
FIG. 8 is a schematic diagram illustrating a configuration of a width prediction model using a neural network.
FIG. 9 is a diagram illustrating an example of a width distribution of a slab after width reduction is performed by a width reduction pressing device.
FIG. 10 is a diagram illustrating a width drop at a leading end portion and a trailing end portion of a rolled material.
FIG. 11 is a diagram illustrating a width distribution formed in a case where horizontal rolling is performed on a rolled material having a constant width in a longitudinal direction without performing width reduction using an edger.
FIG. 12 is a block diagram illustrating a configuration of a width prediction unit according to an embodiment of the present invention.
FIG. 13 is a diagram illustrating a width distribution of a rough rolled material after width reduction of a slab is performed using a width reduction pressing device, and then one-pass width rolling using an edger and one-pass horizontal rolling using a horizontal rolling mill are performed.
FIG. 14 is a diagram illustrating a prediction result of a width distribution of a rough rolled material in a longitudinal direction in an example.
FIG. 15 is a diagram illustrating a prediction result of a width distribution of a rough rolled material in a longitudinal direction in an example.
FIG. 16 is a diagram illustrating a prediction result of a width distribution of a rough rolled material in a longitudinal direction in an example.

Description of Embodiments

Hereinafter, a width prediction method of a rough rolled material, a width control method of a rough rolled material, a manufacturing method of a hot-rolled steel sheet, and a generation method of a width prediction model of a rough rolled material according to an embodiment of the present invention will be described in detail with reference to the drawings.

<Hot Rolling Line>

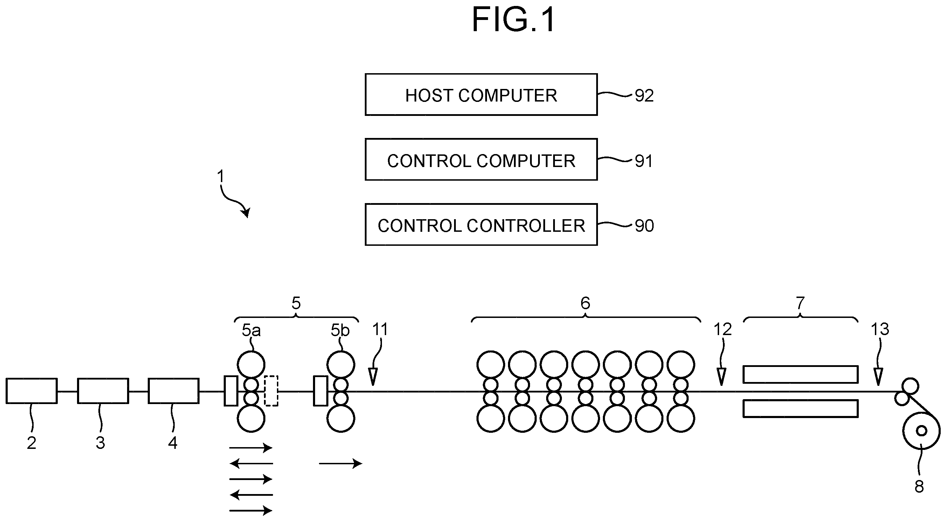

First, a configuration of a hot rolling line to which the present invention is applied will be described with reference to FIGS. 1 to 6.
FIG. 1 is a schematic diagram illustrating a configuration example of the hot rolling line to which the present invention is applied. As illustrated in FIG. 1, a hot rolling line 1 to which the present invention is applied includes a heating furnace 2, a descaling device 3, a width reduction pressing device 4, a rough rolling mill 5, a finish rolling mill 6, a cooling device 7, and a coiler (winding machine) 8. A cast slab (not illustrated) is loaded into the heating furnace 2, then heated to a predetermined set temperature, and extracted from the heating furnace 2 as a hot slab. The hot slab extracted from the heating furnace 2 is subjected to width reduction to a predetermined set width by the width reduction pressing device 4 after a primary scale formed on the surface is removed by the descaling device 3. Then, the slab subjected to the width reduction is rolled to a predetermined thickness in the rough rolling mill 5 to become a rough bar (rough rolled material), and is conveyed to the finish rolling mill 6. In the finish rolling mill 6, the rough bar is rolled to a product thickness by a continuous rolling mill of 5 to 7 stands. The cooling device 7 is provided in a facility called a run-out table on the downstream side of the finish rolling mill 6, and the steel sheet is cooled to a predetermined temperature and then wound into a coil shape by the coiler 8. In addition, a plurality of width meters are installed as width measuring means in the middle of a conveyance step of the hot rolling line 1. In the example illustrated in FIG. 1, a rough delivery-side width meter 11 is installed on the delivery side of the rough rolling mill 5, and a finish delivery-side width meter 12 is installed on the delivery side of the finish rolling mill 6. In addition, a coiler entry width meter (coiler entry-side width meter) 13 that measures the width of the steel sheet before winding is installed on the delivery side of the cooling device 7. Hereinafter, the width of the rough bar measured by the rough delivery-side width meter 11 may be referred to as a rough delivery-side width, the width of the steel sheet measured by the finish delivery-side width meter 12 may be referred to as a finish delivery-side width, and the width of the steel sheet measured by the coiler entry width meter 13 may be referred to as a coiler entry width.

The hot rolling line 1 includes a control controller (PLC) 90 that controls each device constituting the hot rolling line 1, a control computer (process computer) 91 that gives a control command to the control controller 90, and a host computer 92 that gives a manufacturing instruction to the hot rolling line 1. The width control of the steel sheet in the hot rolling line 1 is executed by the host computer 92 or the control computer 91 setting a target value of the rough delivery-side width (rough target width), a target value of the finish delivery-side width (finish target width), and a target value of the coiler entry width (coiler entry target width) on the basis of a manufacturing instruction from the host computer 92, and setting operational conditions of the rough rolling mill 5 and the finish rolling mill 6. Specifically, the host computer 92 or the control computer 91 sets the finish target width in consideration of the width change amount of the steel sheet generated between the delivery side of the finish rolling mill 6 and the coiler entry width meter 13 on the basis of the coiler entry target width determined from the product specification of the hot-rolled steel sheet. Furthermore, the host computer 92 or the control computer 91 sets the rough target width in consideration of the width change amount of the steel sheet in the finish rolling mill 6 on the basis of the set finish target width. Then, the host computer 92 or the control computer 91 sets rolling conditions in each pass of the rough rolling such that the width of the rough bar after the rough rolling matches the rough target width. In addition, the host computer 92 or the control computer 91 sets the rolling conditions in each stand of the finish rolling such that the width of the steel sheet after the finish rolling matches the finish target width. Furthermore, the host computer 92 or the control computer 91 may set the tension between the finish rolling mill 6 and the coiler 8 and a cooling condition of the cooling device 7 such that the width of the steel sheet before the winding matches the coiler entry target width. In this case, in the finish rolling mill 6, dynamic width control may be executed while referring to actual measurement values of the rough delivery-side width and the finish delivery-side width. The control controller 90 has a function of collecting information acquired from various sensors (sheet thickness meter, thermometer, and the like) at a predetermined sampling cycle in addition to information acquired from the width meters installed in the hot rolling line 1, and of outputting the information to the control computer 91.

The width prediction method of the rough rolled material according to an embodiment of the present invention is a method of predicting the width distribution of the rough bar in the longitudinal direction measured by the rough delivery-side width meter 11 installed on the delivery side of the rough rolling mill 5. In addition, the width control method of the rough rolled material according to an embodiment of the present invention is a method of controlling the width of the rough bar in the longitudinal direction such that the width of the rough bar after completion of rough rolling matches the rough target width.

[Heating Furnace]

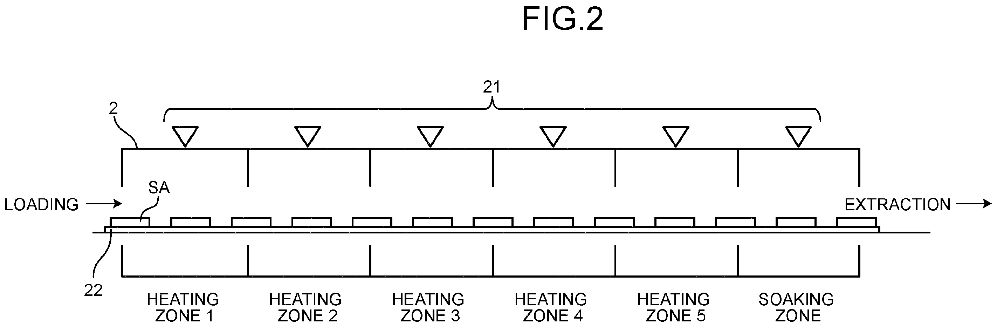

FIG. 2 is a schematic diagram illustrating a configuration example of the heating furnace 2 illustrated in FIG. 1. As illustrated in FIG. 2, in the present embodiment, a slab SA is loaded into the heating furnace 2 from the left side of FIG. 2. The temperature of the slab SA loaded into the heating furnace 2 may be cooled to about room temperature in a post-casting slab yard or may be a temperature of about 600°C during cooling. In addition, there is a case where loading is performed at a temperature of about 600°C to 800°C without passing through the post-casting slab yard. The inside of the heating furnace 2 is divided into a plurality of zones, and a heating zone divided into two to eight zones and one to three soaking zones are generally provided on the upstream side. In the example illustrated in FIG. 2, five heating zones and one soaking zone are provided, and here, both are collectively referred to as a "heating furnace zone". The individual heating furnace zones are set to different ambient temperatures such that the average temperature of the slab SA loaded into the heating furnace 2 is gradually increased to reach a predetermined target heating temperature (target value of the average temperature of the slab SA in a case of being extracted from the heating furnace 2). In addition, a thermometer 21 that measures an ambient temperature in the heating furnace zone is installed above any of the heating furnace zones.

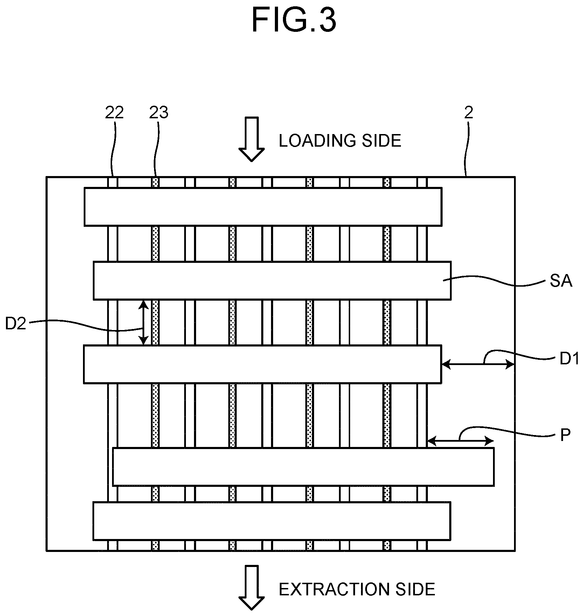

FIG. 3 is a schematic diagram of the inside of the heating furnace 2 illustrated in FIG. 1 as viewed from above. As illustrated in FIG. 3, the slab SA loaded into the heating furnace 2 sequentially passes through each heating furnace zone by a conveyance facility called a walking beam 22 inside the heating furnace 2. In addition, a plurality of slabs SA are simultaneously loaded into the heating furnace 2, and are extracted from the extraction-side outlet of the heating furnace 2 in the order of being loaded into the heating furnace 2, and hot rolling is performed. The inside of the walking beam 22 is water-cooled, and a part where the temperature increase of the slab SA is locally hindered by the member called a skid, which comes into direct contact with the slab SA is generated. A part of the slab SA in contact with the skid is called a skid mark, and is a region having a lower temperature than that of a part not in contact with the skid. As disclosed in Patent Literature 1, the width of the steel sheet varies due to the skid mark, which affects the width accuracy of the hot-rolled steel sheet.

[Width Reduction Pressing Device]

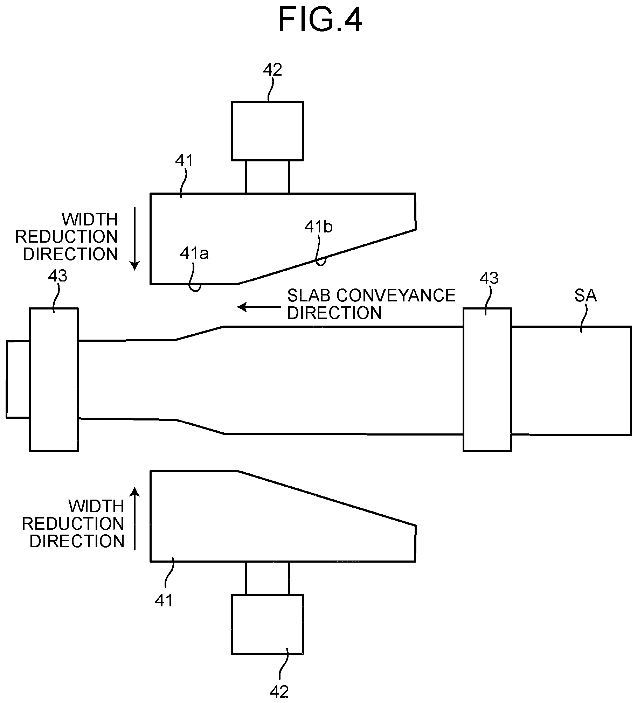

FIG. 4 is a schematic diagram illustrating a configuration example of the width reduction pressing device 4 illustrated in FIG. 1. The slab SA heated by the heating furnace 2 is subjected to width reduction to a predetermined set width by the width reduction pressing device 4 after a primary scale formed on the surface is removed by the descaling device 3. As illustrated in FIG. 4, the width reduction pressing device 4 includes a pair of width reduction dies 41. The width reduction dies 41 press down the slab SA from the width direction. The width reduction pressing device 4 drives the width reduction die 41 by a driving device 42 while conveying the slab SA, and intermittently reduces the width of the slab SA from both sides in the width direction of the slab SA.

In the width reduction pressing device 4, the slab SA is conveyed using a pinch roller 43 or the like. The width reduction pressing device 4 can change a feed pitch of the slab SA between the width reduction passes by changing the driving amount of the pinch roller 43. The feed pitch means a conveyance distance of the slab SA for each pass in the width reduction in the width reduction pressing device 4. The driving amount of the pinch roller 43 is controlled by the control controller 90 that controls the width reduction pressing device 4. A parallel portion 41a parallel to a slab conveyance direction and an inclined portion 41b extending in the width direction toward a direction opposite to the slab conveyance direction are formed on a surface of the width reduction die 41 in contact with the slab SA in order from the leading end side in the slab conveyance direction. In the width reduction die 41, one or a plurality of parallel portions 41a may be provided between the inclined portions 41b in order to suppress occurrence of slip with respect to the slab SA. A deformation state of the slab SA is changed depending on the shape of the width reduction die 41, which affects the width accuracy of the steel sheet in the rough rolling mill 5.

[Rough Rolling Mill]

Returning to FIG. 1. The rough rolling mill 5 includes a reversible rolling mill 5a capable of reverse rolling and a non-reversible rolling mill 5b that allows rolling only in the conveyance direction to the downstream side Arrows (solid line) illustrated below the rough rolling mill 5 illustrated in FIG. 1 represent the reduction pass (a rolling pass for reducing the thickness). In the reversible rolling mill 5a, usually, about 5 to 11 reduction passes are performed in a reversible direction (from the upstream side to the downstream side or from the downstream side to the upstream side). In the final reduction pass, since rolling and conveyance to the next rolling mill are simultaneously executed, the number of rolling passes of the reversible rolling mill is always an odd number, and the rough bar is conveyed to the rolling mill on the downstream side while being rolled. At this time, the time from when the trailing end portion of the rough bar passes through the rolling mill in the current reduction pass to when the rolling direction is reversed and the rough bar is meshed with the rolling mill in the next rolling pass is referred to as an inter-pass time of a reversible pass. In addition, in the final rolling pass of the reversible pass, the time from when the trailing end portion of the rough bar passes through the reversible rolling mill 5a to when the rough bar is meshed with the non-reversible rolling mill 5b is referred to as an inter-pass time of a continuous pass. Furthermore, the inter-pass time of the reversible pass and the inter-pass time of the continuous pass are collectively referred to as an inter-pass air cooling time. The inter-pass air cooling time represents time during which the rough bar is air-cooled during the conveyance, and affects the temperature change of the rough bar.

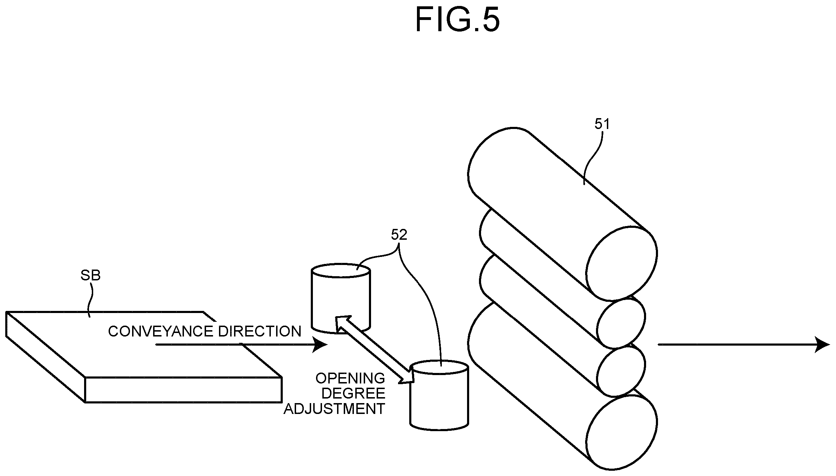

FIG. 5 is a diagram illustrating a configuration of a stand constituting the rough rolling mill 5 illustrated in FIG. 1. As illustrated in FIG. 5, the rough rolling mill 5 includes a horizontal rolling mill 51 that reduces the thickness of a steel sheet SB, and an edger (vertical rolling mill) 52 that reduces the width of the steel sheet SB. The edger 52 is a rolling mill in which a pair of rolls is vertically arranged, and is installed adjacent to the horizontal rolling mill 51. The width reduction (width rolling) of the steel sheet SB using the edger 52 is usually performed before the horizontal rolling in each rolling pass of the rough rolling. Therefore, in a case where one edger 52 is disposed in the reversible rolling mill 5a, the width reduction by the edger 52 is performed only in the forward direction, that is, during the odd-numbered passes, and is not performed during the even-numbered passes, that is, in the passes in the reverse direction. However, in a case where the edgers 52 are arranged on both sides of the reversible rolling mill 5a, width reduction may be performed in any rolling pass. The roll opening degree (roll gap) of the horizontal rolling mill 51 and the opening degree of the edger 52 in each pass of the rough rolling are set by the control computer 91. In the rough rolling mill 5, a descaling header for injecting descaling water toward the steel sheet SB is installed, and descaling is performed on the entry side of the horizontal rolling mill 51. However, the descaling water is not necessarily injected in all the rolling passes of the rough rolling, and for example, a predetermined descaling pattern is set according to a material or the like of the steel sheet SB, such as injection only in the first pass or injection only in the odd-numbered passes. The steel sheet SB in a state where all the rolling passes set in advance by the rough rolling mill 5 are finished is referred to as a rough bar or a sheet bar, and is referred to as a rough rolled material in the present invention.

[Width Meter]

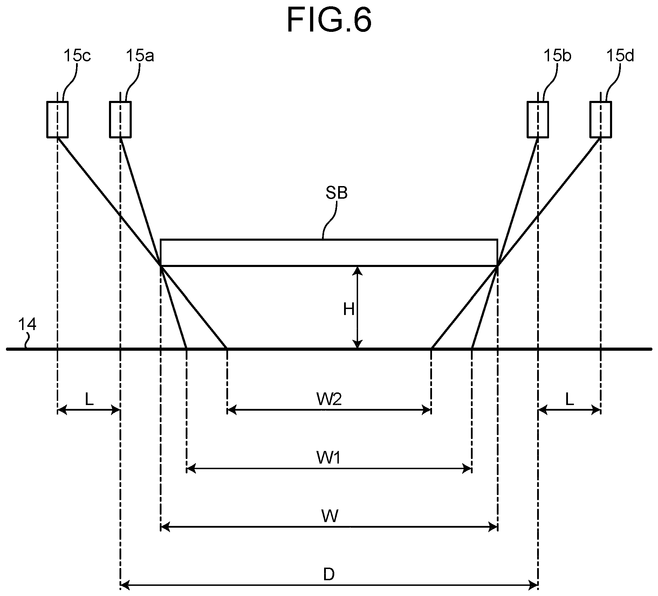

Returning to FIG. 1. The width of the steel sheet in the hot rolling line 1 is measured by the rough delivery-side width meter 11, the finish delivery-side width meter 12, and the coiler entry width meter 13. The optical width measurement methods are often used for these width meters. In the optical width measurement method, a light source is disposed below a pass line through which a steel sheet is conveyed, and an image sensor is disposed above the pass line, and the width is measured on the basis of a shadow length of the steel sheet in the width direction caused by the steel sheet passing through a light beam emitted from the light source. On the other hand, as the width meter, there is a width meter that specifies a position of an end of the steel sheet in the width direction by image processing from an image of the steel sheet captured by a camera and measures the width of the steel sheet. The width meter using a camera has a simple device configuration because there is no need to dispose a light source or an image sensor along the width direction of the steel sheet. However, since the end of the steel sheet in the width direction is imaged from an oblique direction, a measurement error of the width is likely to occur when the steel sheet floats from the pass line. Therefore, a function of correcting the measurement error of the width according to the floating amount of the steel sheet from the pass line is often provided. Specifically, as illustrated in FIG. 6, in a case where the steel sheet SB is conveyed at the height of a floating amount H from a pass line 14, the measurement error of the width is corrected as follows. First, a set of cameras 15a and 15b arranged in the width direction of the steel sheet SB specifies both ends of the steel sheet SB in the width direction, and specifies a measurement value W1 of the width. Next, another set of cameras 15c and 15d arranged in the width direction of the steel sheet SB specifies both ends of the steel sheet SB in the width direction, and specifies a measurement value W2 of the width. Then, on the basis of a positional relationship (in the example illustrated in FIG. 6, an interval D between the cameras 15a and 15b in the width direction and an interval L between the camera 15a (15b) and the camera 15c (15d) in the width direction) between the cameras 15a and 15b and the cameras 15c and 15d, the actual width W of the steel sheet SB is calculated by the following Expression (1) and taken as the measurement value of the width of the steel sheet SB.

$$W = \frac{(D + 2L)W1 - DW2}{(W1 - W2 + 2L)} \quad \cdots (1)$$

However, as another width measurement method, a method of emitting laser light in the width direction of the steel sheet, receiving reflected light from an end surface of the steel sheet, and measuring the width on the basis of the distance to both end surfaces of the steel sheet may be used. Some width meters have a thermal expansion correction function of converting the width into a width after cooling on the basis of the temperature of the steel sheet. Since the width of the steel sheet is measured using the width meter in the process of conveying the steel sheet, the width measurement value of the steel sheet obtained by the width meter is time-series numerical information corresponding to the sampling pitch of the width meter. In addition, information on the conveyance speed at which the steel sheet passes through the position of the width meter is used to be converted into a relationship between the position of the steel sheet in the longitudinal direction and the actual value of the width. Then, the control computer 91 calculates a representative value of the width on the basis of the acquired actual measurement value of the width. As the representative value of the width, an average value (average width) of the width of the steel sheet in the longitudinal direction, an actual measurement value (steady width) of the width in the steady portion excluding the leading and trailing end portions of the steel sheet, an actual measurement value (leading end width) of the width in the leading end portion of the steel sheet, an actual measurement value (trailing end width) of the width in the trailing end, and the like are used. In addition, the minimum value (minimum width), the maximum value (maximum width), and the like of the width of the steel sheet in the longitudinal direction may be calculated. The actual measurement value of the width measured by the width meter may be represented by a deviation from a target width set in advance.

The information on the width distribution in the longitudinal direction of the rough rolled material in the present embodiment refers to the width of the rough rolled material measured by the rough delivery-side width meter 11 and associated with positional information in the longitudinal direction. Normally, since the measurement value by the rough delivery-side width meter 11 is acquired as discrete data for each position divided in the longitudinal direction from the leading end of the rough rolled material, the measurement value is generated as a plurality of data sets in which the distance from the leading end of the rough rolled material and the width measurement value are associated with each other. The information on the width distribution in the longitudinal direction of the rough rolled material is a width measurement value associated with positional data of at least three points with respect to the longitudinal direction of the rough rolled material. However, the information on the width distribution in the longitudinal direction of the rough rolled material is preferably a width measurement value associated with positional data of 100 to 10,000 points with respect to the longitudinal direction of the rough rolled material. This is because in a case where the positional data is less than 100, it may be difficult to specify the width variation in the longitudinal direction of the rough rolled material, and even when the positional data exceeds 10,000, the accuracy of specifying the width variation is not improved. The information on the width distribution may be a width measurement value of the rough rolled material associated with the normalized positional data obtained by normalizing the positional data in the longitudinal direction using the length of the rough rolled material.

<Generation Method of Width Prediction Model>

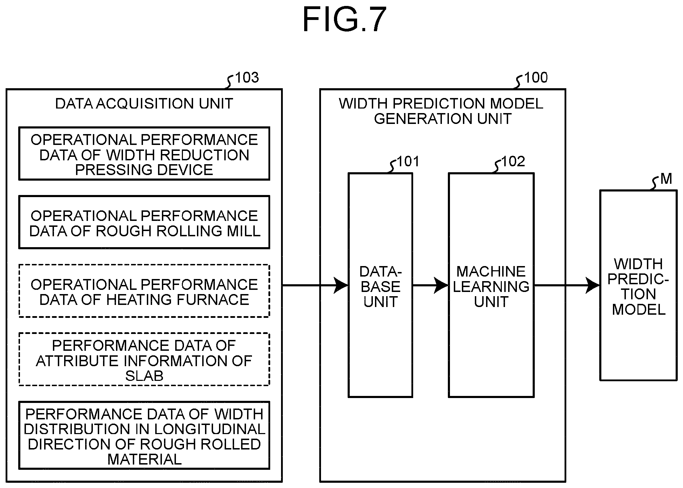

Next, a generation method of a width prediction model according to an embodiment of the present invention will be described with reference to FIGS. 7 to 11.

FIG. 7 is a block diagram illustrating a configuration of a width prediction model generation unit according to an embodiment of the present invention. As illustrated in FIG. 7, a width prediction model generation unit 100 according to an embodiment of the present invention includes a database unit 101 and a machine learning unit 102. The database unit 101 accumulates one or more pieces of operational performance data selected from the operational performance data of the width reduction pressing device 4, one or more pieces of operational performance data selected from the operational performance data of the rough rolling mill 5, and performance data of the width distribution in the longitudinal direction of the rough rolled material. The database unit 101 may accumulate one or more pieces of operational performance data selected from the operational performance data of the heating furnace and one or more pieces of performance data selected from the performance data of attribute information of the slab as necessary. A specific example of the operational data accumulated in the database unit 101 will be described later.

The performance data accumulated in the database unit 101 is appropriately acquired from the control controller 90, the control computer 91, or the host computer 92. In the present embodiment, the width prediction model generation unit 100 includes a data acquisition unit 103 to collect these pieces of performance data. The data acquisition unit 103 temporarily stores the performance data, generates a data set in which a plurality of types of performance data are associated, and then accumulates the data set in the database unit 101. Since the data accumulated in the database unit 101 may be acquired at different timings, a data set having a correspondence relationship with one another can be configured by associating a plurality of types of performance data in the data acquisition unit 103.

As the operational performance data of the width reduction pressing device 4 and the operational performance data of the rough rolling mill 5 included in the data set accumulated in the database unit 101, performance data specified as a representative value in the longitudinal direction of one rough rolled material may be used. The representative value in the longitudinal direction of the rough rolled material refers to one piece of data representing the operational condition in the longitudinal direction of the rough rolled material. As the representative value in the longitudinal direction of the rough rolled material, a representative position at which a position in the longitudinal direction of the rough rolled material is specified is set, and data regarding the operational condition at the set representative position may be used. In addition, as the representative value in the longitudinal direction of the rough rolled material, an average value or a standard deviation of the operational data in the longitudinal direction of the rough rolled material may be used. Furthermore, as the representative value in the longitudinal direction of the rough rolled material, data regarding the operational condition fixed (not changing) with respect to the longitudinal direction of the rough rolled material may be used. For example, in a case where the width reduction with respect to the slab is performed, the representative position may be set in the steady portion of the slab, and the operational performance data set with respect to the representative position may be used. Also in a case where the rough rolling is performed, a representative position may be set in the steady portion of the rough rolled material, and the operational performance data set with respect to the representative position may be used. However, the representative position to be set is not limited to the steady portion of the rough rolled material, one representative position may be set at 1/4 position and 3/4 position with respect to the total length of the slab from the end portion on the downstream side in the conveyance direction of the hot rolling line, or at the leading end portion and the trailing end portion, and the operational performance data may be acquired. In this case, one representative value of an operational parameter of the width reduction pressing device and one representative value of an operational parameter of the rough rolling mill are specified as the operational parameters for one rough rolled material, and these are associated with the width distribution of the rough rolled material. That is, the width prediction model of the present embodiment has a feature of outputting, as a prediction result, the width at a position different from the position in the longitudinal direction of the rough rolled material associated with the operational parameter to be input.

The width prediction model generation unit 100 can be provided in the control computer 91 for controlling the manufacturing of the steel sheet by the hot rolling line 1. In addition, the width prediction model generation unit 100 may be provided in the host computer 92 that gives a manufacturing instruction to the control computer 91, or may be provided in an independent computer that can communicate with other devices. In addition, the width prediction model generation unit 100 may be configured in a device separate from the database unit 101 by using a device capable of receiving the data set accumulated in the database unit 101. In the database unit 101, 100 or more data sets are accumulated. Preferably, 10,000 or more data sets, more preferably 100,000 or more data sets are accumulated in the database unit 101. Screening may be performed on the data accumulated in the database unit 101 as necessary.

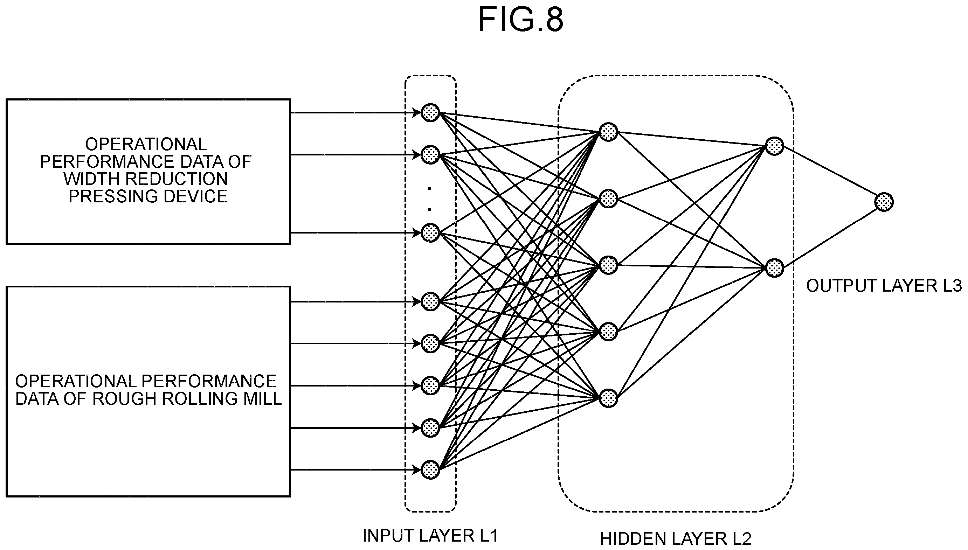

Using the data set accumulated in the database unit 101, the machine learning unit 102 generates a width prediction model M for predicting the information on the width distribution in the longitudinal direction of the rough rolled material by machine learning using a plurality of pieces of learning data including, as input performance data, one or more pieces of operational performance data selected from the operational parameters of the width reduction pressing device 4 and one or more pieces of operational performance data selected from the operational parameters of the rough rolling mill 5 and using, as output performance data, the information on the width distribution in the longitudinal direction of the rough rolled material. A machine learning model for generating the width prediction model M may be any machine learning model as long as practically sufficient width prediction accuracy can be obtained. For example, a commonly used neural network (including deep learning, convolutional neural network, and the like), decision tree learning, random forest, support vector regression, and the like may be used. In addition, an ensemble model obtained by combining a plurality of models may be used. For example, the width prediction model M can be generated by machine learning using a general neural network as illustrated in FIG. 8. In particular, when deep learning is used, other operational parameters having a correlation with the width distribution of the rough rolled material can be freely selected as an input without considering the problem of multicollinearity, and thus the prediction accuracy of the width distribution of the rough rolled material can be improved. For example, a neural network can be used in which the number of hidden layers is two, the number of nodes of each hidden layer is three, and a sigmoid function is used as an activation function.

The machine learning unit 102 may improve estimation accuracy of the width distribution of the rough rolled material by performing learning by dividing the data set accumulated in the database unit 101 into training data and test data. For example, the machine learning unit 102 may learn the weight coefficient of the neural network using the training data, and generate the width prediction model M while appropriately changing the structure (the number of hidden layers or the number of nodes) of the neural network so as to increase the accuracy rate of the width distribution of the rough rolled material in the test data. An error propagation method can be used to update the weight coefficient. The width prediction model M may be updated to a new model by relearning every six months or every year, for example. This is because the more data stored in the database unit 101, the more accurate the width distribution of the rough rolled material can be predicted, and by updating the width prediction model M on the basis of the latest data, the width prediction model M reflecting the change in the manufacturing condition of the hot-rolled steel sheet manufactured using the hot rolling line can be generated. In the present embodiment, in a case where the hot-rolled steel sheet is manufactured using the hot rolling line, information on the width distribution in the longitudinal direction of the rough rolled material can be predicted from the operational condition specified as the representative value in the longitudinal direction of the rolled material. In the width prediction of the rough rolled material in the related art, the performance data of the operational condition is acquired for each position in the longitudinal direction of the rolled material, and the performance data of the width acquired for each position in the longitudinal direction of the rough rolled material is associated. As a result, in a case where the slab extracted from the heating furnace 2 is plastically deformed by the width reduction pressing device 4 or the rough rolling mill 5 and is largely stretched as the rough rolled material, it is necessary to perform tracking for specifying the position in the longitudinal direction of the rolled material to associate the operational condition of the width reduction pressing device 4 or the rough rolling mill 5 with the positional information of the rough rolled material. On the other hand, in the present embodiment, since the representative value of the operational condition in the longitudinal direction of the rolled material is directly associated with the width distribution of the rough rolled material, it is not necessary to track a specific position of the rolled material in the rough rolling.

[Attribute Information of Slab]

The attribute information of the slab that can be used for input of the width prediction model M refers to information regarding a slab dimension that affects the width change of the rolled material in the width reduction pressing device 4 and the rough rolling mill 5 of the hot rolling line 1. The information regarding the slab dimension is information regarding the thickness, width, length, and weight of the slab. The information regarding the slab dimension affects a temperature change of the steel sheet in the hot rolling line 1, and affects the deformation resistance of the rolled material at the time of width reduction or rough rolling. In particular, since the behavior of temperature drop is different between the leading end portion and the trailing end portion and the steady portion of the rolled material, as a result, a correlation with the width distribution in the longitudinal direction of the rough rolled material is generated.

[Operational Parameter of Heating Furnace]

The operational parameter of the heating furnace that can be used for the input of the width prediction model M is a parameter representing the operational condition of heating the slab in the heating furnace 2 of the hot rolling line 1, and refers to information that affects the width change of the rolled material in the width reduction pressing device 4 and the rough rolling mill of the hot rolling line 1. As the operational parameter of the heating furnace 2, the temperature of the slab in a case of being loaded into the heating furnace 2, the in-furnace time in a specific heating furnace zone in the heating furnace 2, the ambient temperature of the final heating furnace zone of the heating furnace 2, and the temperature of the slab extracted from the heating furnace 2 can be used. These parameters change the behavior of temperature drop at the leading end portion, the trailing end portion, and the steady portion of the rolled material, so that a correlation with the width distribution in the longitudinal direction of the rough rolled material is generated.

In addition, information such as the loading position of the slab in the heating furnace 2 and the positional relationship of the slab with another slab in the heating furnace 2 may be used. As illustrated in FIG. 3, as the loading position of the slab in the heating furnace 2, information on an in-furnace loading position P, which represents the distance between a walking beam 22 located at one end portion of the heating furnace 2 and the end portion of the slab SA in the longitudinal direction can be used. This is because the position of the skid mark in the longitudinal direction of the slab SA is changed depending on the in-furnace loading position P, which affects the position where the width variation occurs in the longitudinal direction of the steel sheet. As the loading position of the slab SA, a distance D1 between the end portion of the slab SA in the longitudinal direction and a furnace wall of the heating furnace 2, and a parameter representing the interval between the walking beam 22 (fixed skid) and a moving skid 23 of the heating furnace 2 loaded with the slab SA may be used.

In addition, as the information on the positional relationship of the slab with another slab in the heating furnace 2, as illustrated in FIG. 3, a distance (loading interval) D2 between the slab and another adjacent slab in the heating furnace 2 can be used. In a case where the loading interval D2 is changed in the heating furnace 2, the temperature at the end surface of the slab is changed. This is because the temperature distribution of the rolled material in the hot rolling line 1 is affected, and the width distribution of the rough rolled material is affected. As the information on the positional relationship between the slab and another slab in the heating furnace 2, the length and thickness of another slab, the difference in distance of the leading end portion of the slab as a prediction target and the leading end portion of another slab with the furnace wall of the heating furnace, and the like may be used.

[Operational Parameter of Width Reduction Pressing Device]

The operational parameter of the width reduction pressing device 4 that can be used for the input of the width prediction model M refers to an operational condition when the width reduction is performed on the heated slab. As the operational parameter of the width reduction pressing device 4, an operational parameter regarding the width reduction amount with respect to the slab can be used. The operational parameter regarding the width reduction amount with respect to the slab includes the width reduction amount at a representative position in the longitudinal direction of the slab and the feed pitch of the slab between the width reduction passes. The operational parameter regarding the width reduction amount with respect to the slab creates a difference between a dog-bone (thickness distribution in the width direction) shape of the steady portion and a dog-bone shape of the leading and trailing end portions formed in the slab after the width reduction, affecting the width distribution in the longitudinal direction of the rough rolled material. That is, even in a case where the width reduction amount, which is a representative value in the longitudinal direction of the slab, is constant with respect to the longitudinal direction of the slab, the dog-bone shape is different at the steady portion, the leading end portion, and the trailing end portion of the slab, and thus, the width distribution in the longitudinal direction of the rough rolled material is affected. In addition, even in a case where the feed pitch of the slab between the width reduction passes is constant, there is a difference in the dog-bone shape between the steady portion and the leading and trailing end portions, which affects the width distribution in the longitudinal direction of the rough rolled material. As for the width reduction amount with respect to the slab, different width reduction amounts may be set in the leading end portion, the steady portion, and the trailing end portion of the slab. In this case, any width reduction amount set for the leading end portion, the steady portion, and the trailing end portion of the slab may be used as a representative value of the operational parameter of the width reduction pressing device 4. In addition, as for the feed pitch of the slab between the width reduction passes, different feed pitches may be set at the leading end portion, the steady portion, and the trailing end portion of the slab. In this case, any feed pitch set for the leading end portion, the steady portion, and the trailing end portion of the slab may be used as a representative value of the operational parameter of the width reduction pressing device 4.

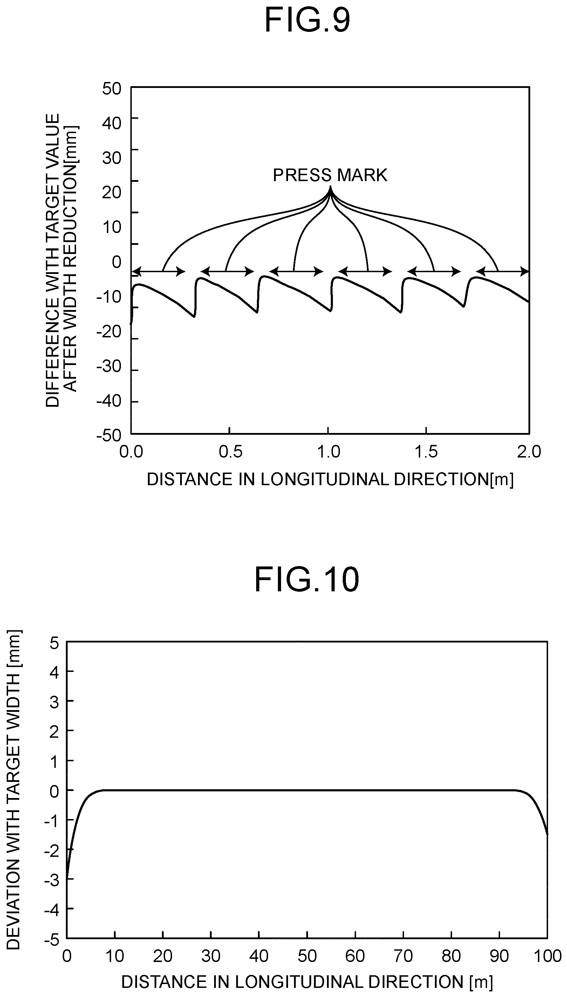

Furthermore, as the operational parameter of the width reduction pressing device 4, the operational parameter regarding a die shape applied to the width reduction pressing device 4 can be used. The operational parameter regarding the die shape is a fixed representative value with respect to the longitudinal direction of the slab. For example, the length of the parallel portion 41a or the angle of the inclined portion 41b formed in the width reduction die 41 may be used. This is because the shape of the width reduction die 41 causes a difference in the deformation state between the steady portion and the leading and trailing end portions of the slab, and affects the width distribution in the longitudinal direction of the rough rolled material. FIG. 9 illustrates an example of the width distribution after the width reduction is performed by the width reduction pressing device 4 with the width reduction amount and the feed pitch constant in the longitudinal direction of the slab. As illustrated in FIG. 9, it can be seen that a periodic width variation (also referred to as a press mark) occurs from the leading end portion to the trailing end portion of the slab after the width reduction. Since the width reduction using the width reduction pressing device 4 is intermittent processing, a wide portion and a narrow portion appear at predetermined intervals. As a result, the width distribution in the longitudinal direction of the rough rolled material is affected.

As described above, by specifying the operational parameter of the width reduction pressing device 4 as the representative value in the longitudinal direction of one slab, a pattern of the width variation in the longitudinal direction is characterized for the slab after the width reduction. That is, it is possible to specify the feature of the distribution regarding the width variation in the longitudinal direction for the slab after the width reduction without specifying the operational parameter at each position along the longitudinal direction of the slab.

[Operational Parameter of Rough Rolling Mill]

The operational parameter of the rough rolling mill 5 used for the input of the width prediction model M means a rolling operational condition that affects the width distribution in the longitudinal direction of the rolled material in an arbitrary rolling pass of the rough rolling by the rough rolling mill 5. The operational parameter of the rough rolling mill 5 preferably includes rolling conditions by the horizontal rolling mill 51 and the edger 52 constituting the rough rolling mill 5. As the rolling condition of the horizontal rolling mill 51, a roll opening degree, a work roll diameter, an entry-side sheet thickness, a delivery-side sheet thickness, a reduction ratio, a rough target width, a rolling load, and a steel sheet temperature in an arbitrary rolling pass may be used. Even in a case where the operational condition in the horizontal rolling is constant with respect to the longitudinal direction of the rolled material, the widening behavior is different between the steady portion and the leading and trailing end portions of the rolled material, which affects the width distribution in the longitudinal direction of the rough rolled material.

As the rolling condition of the edger 52, an edger opening degree, an edger roll diameter, a sheet thickness, a width reduction ratio, and a width reduction load in an arbitrary rolling pass may be used. This is because these rolling conditions affect the widening behavior in horizontal rolling of the rolled material and also affect the difference in widening between the steady portion and the leading and trailing end portions of the rolled material. In addition, even in a case where the operational condition in the width rolling is constant with respect to the longitudinal direction of the rolled material, there is a difference in the dog bone formation behavior between the steady portion and the leading and trailing end portions of the rolled material, which affects the width distribution in the longitudinal direction of the rough rolled material. Since the rolling condition as the operational parameter of the rough rolling mill largely affects the width distribution of the rough rolled material, the rolling conditions corresponding to all rolling passes of the rough rolling are preferably included in the operational parameter of the rough rolling mill. As for the edger opening degree, different edger opening degrees may be set at the leading end portion, the steady portion, and the trailing end portion of the rolled material. In this case, any edger opening degree set for the leading end portion, the steady portion, and the trailing end portion of the rolled material may be used as a representative value of the operational parameter of the rough rolling mill 5.

In addition, the operational parameter of the rough rolling mill 5 may include a set value or an actual value of the delivery-side sheet thickness from the first pass to the final pass of the rough rolling. It is a so-called pass schedule of rough rolling. In a case where the pass schedule is different, the thickness of the rolled material in a case of being conveyed between the rolling passes is changed, so that the temperature distribution at the time of air cooling is changed, which causes a difference in the deformation behavior in the width direction depending on the position in the longitudinal direction of the rolled material. Furthermore, the operational parameter of the rough rolling mill 5 may include information regarding the air cooling time between the rolling passes and the presence or absence of injection of descaling water in an arbitrary rolling pass. This is because these are the operational conditions that are not changed for the longitudinal direction of the rolled material, but affect the difference in the temperature drop amount between the steady portion and the leading and trailing end portions of the rolled material, and cause a difference in the deformation behavior in the width direction depending on the position in the longitudinal direction of the rolled material. As for the roll opening degree of the horizontal rolling mill 51, different roll opening degrees may be set at the leading end portion, the steady portion, and the trailing end portion of the rolled material. In this case, any roll opening degree set for the leading end portion, the steady portion, and the trailing end portion of the rolled material may be used as a representative value of the operational parameter of the rough rolling mill 5.

FIG. 10 schematically illustrates a width drop at the leading end portion and the trailing end portion of the rolled material caused by the rough rolling. The width drop refers to a behavior in which the width of the leading end portion or the trailing end portion becomes smaller than the width of the steady portion by rough rolling. This is because, when the width rolling is performed on the rolled material by the edger, in the steady portion, when the reduction in the width direction is performed by the edger roll, the material ahead and behind the steady portion in the longitudinal direction become resistance to the reduction in the width direction, and the thickness distribution in the width direction called a dog bone in which deformation concentrates on the end portions of the rolled material in the width direction is formed. Then, in a case where the rolled material having the dog bone is horizontally rolled, the plastic flow in the width direction is promoted by the thickened portion formed at the end portions in the width direction, and the width springback is increased. On the other hand, in a case where the width rolling is performed on the leading and trailing end portions by the edger, since there is no ahead or behind material in the longitudinal direction, the resistance to the reduction in the width direction is weakened, and the thickening of the rolled material is likely to occur toward the central portion of the rolled material in the width direction. As a result, when the horizontal rolling is performed, the plastic flow in the width direction is suppressed, and the width springback becomes smaller than that in the steady portion. As described above, since the thickening behavior of the rolled material by the edger is different between the steady portion and the leading and trailing end portions of the rolled material, the width widening caused by the horizontal rolling is different depending on the position in the longitudinal direction of the rolled material, and the width drop occurs.

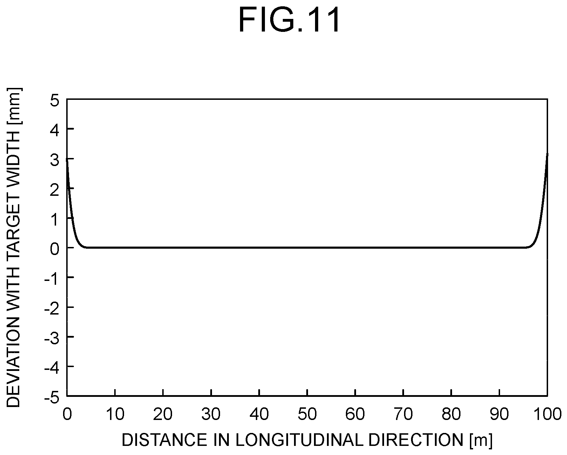

On the other hand, FIG. 11 schematically illustrates the width distribution formed in a case where the horizontal rolling is performed on the rolled material having a constant width in the longitudinal direction without performing the width reduction using the edger. In a case of performing the horizontal rolling, in the steady portion, since the material existing ahead and behind the steady portion in the longitudinal direction generates resistance (restraint) of the plastic flow in the width direction, the width widening of the rolled material is small. On the other hand, in the leading and trailing end portions, since there is no material, which restrains the plastic flow in the width direction, ahead or behind in the longitudinal direction, the width widening of the rolled material is increased. Therefore, in a case of performing the horizontal rolling on the rolled material having a constant width in the longitudinal direction, the width widening in the leading end portion and the trailing end portion of the rolled material is increased as illustrated in FIG. 11.

As described above, the width of the rolled material in the edger and the horizontal rolling mill constituting the rough rolling mill 5 has a constant pattern in the longitudinal direction even in a case where the operational condition of the rough rolling mill 5 is constant in the longitudinal direction of the rolled material. Therefore, in the present embodiment, as the operational parameter of the rough rolling mill, the operational parameter specified as the representative value in the longitudinal direction of the rolled material can be used to be associated with the information on the width distribution in the longitudinal direction of the rough rolled material.

<Width Prediction Method of Rough Rolled Material>

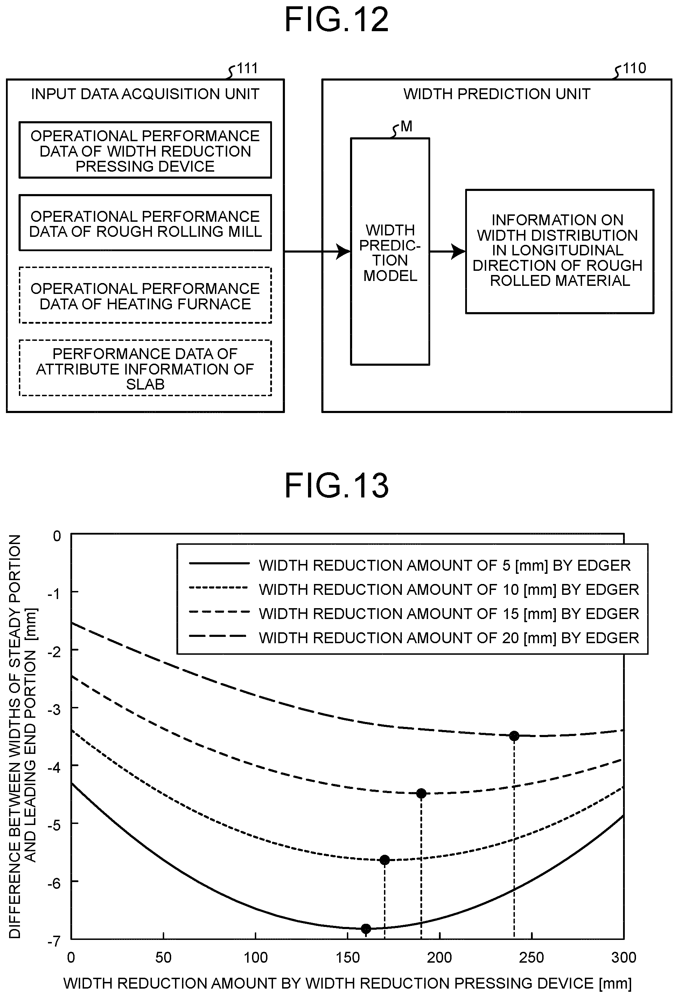

Next, a width prediction method of the rough rolled material according to an embodiment of the present invention will be described with reference to FIGS. 12 and 13.

The width prediction method of the rough rolled material according to an embodiment of the present invention includes a step of predicting the width distribution in the longitudinal direction of the rough rolled material by inputting the operational parameter of the width reduction pressing device 4 and the operational parameter of the rough rolling mill 5 to the width prediction model M and outputting information on the width distribution in the longitudinal direction of the rough rolled material. A width prediction unit that executes the step of predicting the width distribution of the rough rolled material can be provided in the control computer 91 for controlling the hot rolling line 1. In addition, the width prediction unit may be provided in the host computer 92 that gives a manufacturing instruction to the control computer 91, or may be provided in an independent computer that can communicate with other devices. In addition, the width prediction unit may be configured in a device separate from the width prediction model generation unit 100 by using a device capable of receiving the width prediction model M generated by the width prediction model generation unit 100. Hereinafter, the operation of the width prediction unit according to an embodiment of the present invention will be described with reference to FIG. 12.

FIG. 12 is a block diagram illustrating a configuration of the width prediction unit according to an embodiment of the present invention. The operation of a width prediction unit 110 illustrated in FIG. 12 is executed before the rough rolling of the hot-rolled steel sheet manufactured in the hot rolling line 1 is completed. The operation of the width prediction unit 110 can be executed, for example, at a stage when a slab as the width prediction target is extracted from the heating furnace 2. At the stage when the slab is extracted from the heating furnace 2, the control computer 91 calculates at least set values of the operational conditions of the width reduction pressing device 4 and the rough rolling mill 5, and these set values can be used for input of the width prediction model M. In that case, the information regarding the slab dimension loaded in the heating furnace 2 is stored in the host computer 92, and the performance data of the operational parameter of the heating furnace 2 can be acquired. In addition, the operation of the width prediction unit 110 can be executed, for example, at a stage after the steel sheet as the width prediction target is subjected to the width reduction by the width reduction pressing device 4. For the slab SA after the width reduction, the performance data of the operational parameter of the width reduction pressing device 4 is acquired by the control controller 90 or the control computer 91, the performance data is used for input of the width prediction model M, and the set value for the operational parameter of the rough rolling mill 5 is set by the control computer 91.

The operation of the width prediction unit 110 can also be executed, for example, in an intermediate pass of the rough rolling by the rough rolling mill 5. The performance data of the operational parameter of the width reduction pressing device 4 is specified, and the actual value of the operational parameter up to the intermediate pass of the rough rolling and the set value after the next pass may be used as inputs of the width prediction model M. As described above, an input data acquisition unit 111 illustrated in FIG. 12 acquires the actual value or the set value of the operational parameter in the hot rolling line 1 held by any one of the control controller 90, the control computer 91, and the host computer 92. Then, the width prediction unit 110 inputs the input data acquired by the input data acquisition unit 111 to the width prediction model M to acquire information on the width distribution of the rough rolled material. As described above, since the operation of the width prediction unit 110 can be executed at each stage when the steel sheet passes through each step of the hot rolling line 1, the operation may be executed a plurality of times in the process of manufacturing one steel sheet.

The information on the width distribution of the rough rolled material output by the width prediction unit 110 may be displayed on a monitor or the like connected to the width prediction unit 110. On the basis of the output display of the width distribution output by the width prediction unit 110, at least one of the rough target width, the finish target width, and the coiler entry target width can be reset, and the width defect of the hot-rolled steel sheet can be suppressed. The significance of using one or more operational parameters selected from the operational parameters of the width reduction pressing device 4 and one or more operational parameters selected from the operational parameters of the rough rolling mill 5 as the input of the width prediction model M will be described. FIG. 13 is a diagram illustrating the width distribution of the rough rolled material after the width reduction of the slab is performed using the width reduction pressing device 4, and then one-pass width rolling using the edger and one-pass horizontal rolling using the horizontal rolling mill are performed. The vertical axis in FIG. 13 represents the difference between the width of the steady portion and the width of the leading end portion of the rough rolled material, and is an index representing the width distribution of the rough rolled material. In addition, the horizontal axis indicates the width reduction amount of the steady portion by the width reduction pressing device 4. In this case, the results in a case where the width reduction amount of the steady portion of the width reduction press, which is the operational parameter of the width reduction pressing device 4, is changed in a range of 0 to 300 mm, and the width reduction amount of the steady portion by the edger, which is the operational parameter of the rough rolling mill, is changed in a range of 5 to 20 mm are illustrated. As can be seen from FIG. 13, the width difference between the steady portion and the leading end portion is changed so as to generate a minimum value with respect to the width reduction amount of the width reduction pressing device 4. In addition, it can be seen that the width reduction amount of the width reduction pressing device 4 in which the width difference between the steady portion and the leading end portion takes a minimum value takes different values depending on the width reduction amount by the edger of the rough rolling mill 5. That is, the width reduction amount of the width reduction pressing device 4 for minimizing the width difference between the steady portion and the leading end portion, which is an index of the width distribution in the longitudinal direction of the rough rolled material, is changed depending on the width reduction amount by the edger of the rough rolling mill 5. Accordingly, by using one or more operational parameters selected from the operational parameters of the width reduction pressing device 4 and one or more operational parameters selected from the operational parameters of the rough rolling mill 5 in combination as the input of the width prediction model M, it is possible to improve the prediction accuracy of the width distribution in the longitudinal direction of the rough rolled material.

<Width Control Method of Rough Rolled Material>

Next, a width control method of the rough rolled material according to an embodiment of the present invention will be described.

In the width control method of the rough rolled material according to an embodiment of the present invention, the operational parameter of the rough rolling mill 5 is reset on the basis of the information on the width distribution in the longitudinal direction of the rough rolled material predicted as described above. In the width prediction method of the rough rolled material, the information on the width distribution in the longitudinal direction of the rough rolled material, which is the output of the width prediction model M, represents the width distribution in the longitudinal direction from the leading end to the trailing end of the rough rolled material. The width control in the hot rolling line is usually performed such that the minimum sheet width in the longitudinal direction of the hot-rolled steel sheet does not fall below the lower limit value of the product width as the hot-rolled steel sheet. This is because when a region having an insufficient width is generated in a part of the hot-rolled steel sheet in the longitudinal direction, it is necessary to cut off the part, but when a part of the hot-rolled steel sheet in the longitudinal direction is cut off, the single weight of the coil does not satisfy the product specification, so that the entire hot-rolled steel sheet becomes defective and the yield is greatly reduced. Therefore, the lower limit value is also set for the width of the rough-rolled material, and control is performed such that a portion falling below the lower limit of the rough target width is not generated in a part of the rough rolled material in the longitudinal direction.

According to the present embodiment, since the width distribution in the longitudinal direction from the leading end to the trailing end of the rough rolled material can be predicted before all the passes of the rough rolled material is completed, in a case where it is predicted that a portion falling below the lower limit value of the rough target width is generated in a part of the rough rolled material in the longitudinal direction, the operational parameter of the rough rolling mill is set, and control is performed such that no portion falling below the lower limit value of the rough target width is generated in the rough rolled material over the entire length in the longitudinal direction. Specifically, the edger opening degree of the edger 52 may be set to be large in the final pass of the rough rolling. In this case, the edger opening degree of the edger 52 may be larger than the set value only for a portion predicted to fall below the lower limit value of the rough target width in the longitudinal direction of the rough rolled material. Since the leading end portion and the trailing end portion of the rough rolled material may be cut off by the crop shear located on the upstream side of the finish rolling mill 6, it is not necessary to set the large edger opening degree even in a case where there is a portion falling below the lower limit value of the rough target width in a part of the rough rolled material in the longitudinal direction in a region of 0.2 to 0.5 m of the leading end portion or the trailing end portion of the rough rolled material. In this way, by controlling the rough rolled material so as not to fall below the lower limit value of the rough target width over the entire length of the rough rolled material, the finish rolling is performed by the finish rolling mill 6, and it is possible to suppress the occurrence of a width shortage in the hot-rolled steel sheet wound by the coiler 8 and to produce a hot-rolled steel sheet excellent in width accuracy.

[Example 1]

In the present example, the present invention in a hot rolling line including the width reduction pressing device 4 on the downstream side of the heating furnace 2, the rough rolling mill 5 including four reversible rolling mills and one non-reversible rolling mill, and the 7-stand finish rolling mill 6 is applied. In the present example, by the hot rolling line, a slab having a thickness of 250 to 270 mm and a width of 600 to 1600 mm is heated by the heating furnace 2 to produce a steel sheet having a sheet thickness of a rough rolled material (rough bar thickness) of 30 to 35 mm and a sheet thickness of 2 to 3 mm on the delivery side of the finish rolling mill. The hot rolling line includes the rough delivery-side width meter 11, the finish delivery-side width meter 12, and the coiler entry width meter 13. The control controller 90, the control computer 91, and the host computer 92 of the hot rolling line collect actual values of the operational parameters of the steel sheet manufactured in the hot rolling line, and acquire the performance data by the data acquisition unit 103.

In the present example, the data acquisition unit 103 acquires the width reduction amount in the steady portion of the slab and the feed pitch of the slab for each pass of the width reduction pressing as the operational performance data of the width reduction pressing device 4. As the operational performance data of the rough rolling mill 5, set values of the entry-side sheet width and the delivery-side sheet width of the edger in the steady portion of the rolled material and the roll diameter of the edger roll are used, and these are acquired for all passes of the rough rolling pass. Furthermore, as the operational performance data of the rough rolling mill 5, set values of the entry-side sheet width and the delivery-side sheet width of the horizontal rolling in the steady portion of the rolled material and the work roll diameter of the horizontal rolling mill are used, and these are acquired for all passes of the rough rolling pass. In the present example, in addition to the above, the sheet thickness of the slab is acquired from the host computer 92 as the performance data of the attribute information of the slab.

The data acquisition unit 103 acquires, from the control computer 91, the performance data of the width distribution in the longitudinal direction of the rough rolled material measured using the rough delivery-side width meter 11. The information on the width distribution of the rough rolled material is obtained by normalizing the positional data in the longitudinal direction using the length of the rough rolled material and representing the width at each of the 1000 divided positions in the longitudinal direction of the rough rolled material. Then, when 30,000 data sets are accumulated in the database unit 101, the width prediction model M is generated by the machine learning unit 102. In this case, the machine learning unit 102 divides the data sets accumulated in the database unit 101 into 20,000 pieces of learning data and 10,000 pieces of test data, and evaluates the prediction accuracy for the test data using the width prediction model M generated using the learning data. The machine learning is performed using a neural network. The hidden layer of the neural network is set to one layer, the number of nodes is set to 500, and a sigmoid function is used as the activation function. The number of nodes in the output layer is set to 200, and the width is predicted at 200 divided positions in the longitudinal direction of the rough rolled material.

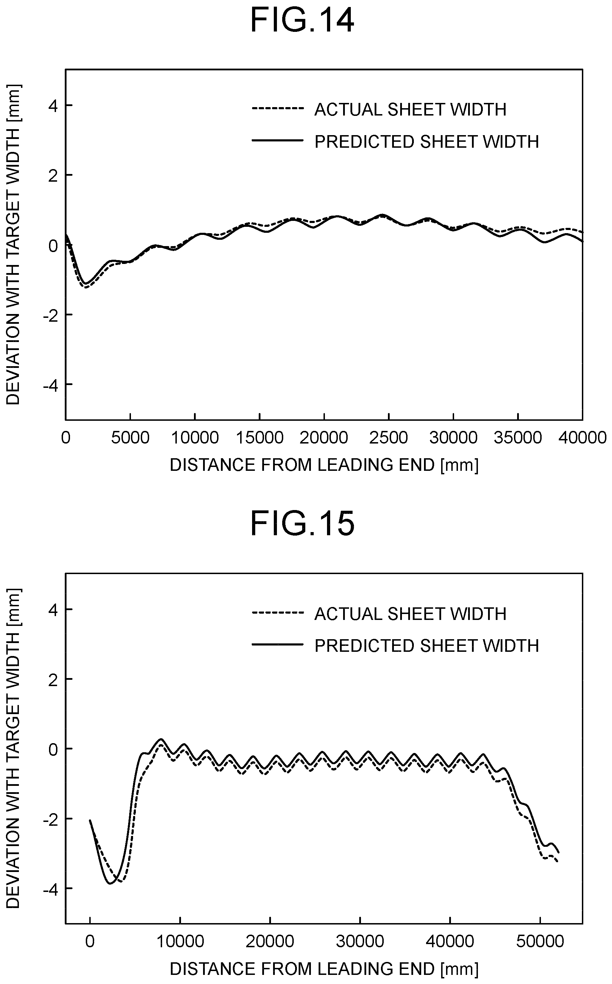

The width distribution in the longitudinal direction of the rough rolled material predicted in this example is illustrated in FIGS. 14 and 15. FIGS. 14 and 15 illustrate comparison between performance data of the width distribution of in the longitudinal direction of the rough rolled material included in the test data and information of the width distribution in the longitudinal direction of the rough rolled material predicted by the width prediction model M. The vertical axis of the graph indicates the deviation from the target value of the width set for the rough width control. The prediction result illustrated in FIG. 14 and the prediction result illustrated in FIG. 15 are different from each other in the operational conditions of the width reduction pressing device 4 and the operational conditions of the rough rolling mill 5. From all the results, it is confirmed that the width distribution in the longitudinal direction of the rough rolled material can be accurately predicted including the influence of the width drop formed at the leading end portion or the trailing end portion of the rough rolled material and the influence of the intermittent press mark formed at the normal portion. From the 10,000 pieces of test data, 100 data sets having the same category of steel type of the slab and the dimension of the hot-rolled steel sheet after the finish rolling are selected, and the performance data on the width distribution in the longitudinal direction of the rough rolled material included in the data are evaluated. As a result, the average deviation from the target width with respect to the entire length of the rough rolled material is 5.5 mm, and the standard deviation is 5.0 mm. For the rough rolled material having such a width variation, the width prediction model M generated in this example is able to predict the average deviation of 0.0 mm and the standard deviation of 1.5 mm from the target width with respect to the entire length of the rough rolled material.

[Example 2]

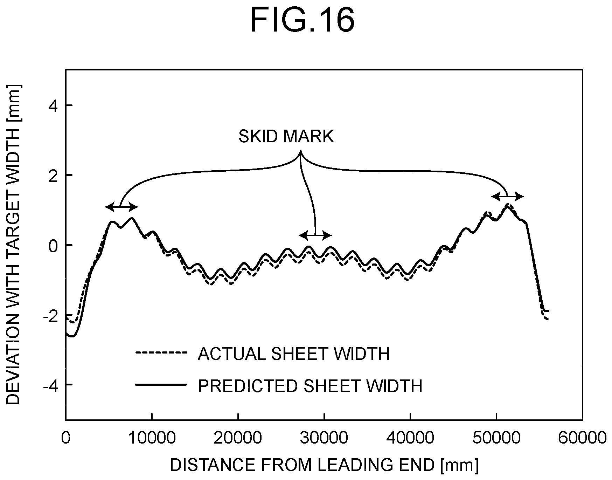

In the present example, by the same hot rolling line as in Example 1, a slab having a thickness of 230 to 235 mm and a width of 600 to 2000 mm is heated by the heating furnace 2 to produce a steel sheet having a sheet thickness of a rough rolled material (rough bar thickness) of 30 to 35 mm and a sheet thickness of 2 to 3 mm on the delivery side of the finish rolling mill. In the present example, the operational parameters of the heating furnace 2 are used as the input data of the width prediction model M in addition to the operational parameters used in Example 1. As the operational parameters of the heating furnace 2, the slab temperature at the time of loading into the heating furnace, the in-furnace time in the heating furnace 2, the loading position of the slab in the heating furnace 2, the loading interval with the preceding slab in the heating furnace 2, and the loading interval with the subsequent slab in the heating furnace 2 are selected. Then, similarly to Example 1, the data acquisition unit 103 acquires the operational performance data of the heating furnace 2 together with the operational performance data of the width reduction pressing device 4, the operational performance data of the rough rolling mill 5, and the performance data of the attribute information of the slab, and accumulates the data set in the database unit 101. In this case, 30,000 data sets are accumulated in the database unit 101, the accumulated data sets are divided into 20,000 pieces of learning data and 10,000 pieces of test data, and the width prediction model M is generated using the learning data. The machine learning method used by the machine learning unit 102 is a neural network, and the configuration thereof is similar to that of Example 1. The width distribution in the longitudinal direction of the rough rolled material predicted in the present example is illustrated in FIG. 16. As illustrated in FIG. 16, the characteristics of the width distribution of the rough rolled material caused by the skid mark formed in the heating furnace 2 are also predicted, and the actual measurement data is able to be accurately predicted.

[Example 3]

In the present example, the prediction accuracy of the width distribution when the input data of the width prediction model M is changed is evaluated using the data set accumulated in the database unit 101 in Example 1. In the database unit 101, in addition to the operational performance data of the width reduction pressing device 4 and the rough rolling mill 5 used as the input data of the width prediction model M in Example 1, the operational performance data of the other width reduction pressing device 4 and rough rolling mill 5 is accumulated. In the present example, 30,000 data sets accumulated in the database unit 101 are divided into 20,000 pieces of learning data and 10,000 pieces of test data, and the prediction accuracy for the test data is evaluated using the width prediction model M generated using the learning data. The machine learning is performed using a neural network. The hidden layer of the neural network is set to one layer, the number of nodes is set to 500, and a sigmoid function is used as the activation function. The number of nodes in the output layer is set to 200, and the width is predicted at 200 divided positions in the longitudinal direction of the rough rolled material. Table 1 below indicates the operational performance data used as the input of the width prediction model M in the present example.

In Invention Example 1, as the operational performance data of the width reduction pressing device 4, the width reduction amount and the feed pitch in the steady portion of the slab are acquired as representative values. In the operational performance data of the rough rolling mill 5, as the operational performance data of the edger 52, the set value of the edger opening degree in the steady portion of the rolled material and the edger roll diameter in all the rolling passes of the rough rolling are used as representative values. In addition, in the operational performance data of the rough rolling mill 5, as the operational performance data of the horizontal rolling mill 51, the set values of the entry-side sheet width and the delivery-side sheet width of the horizontal rolling mill at the steady portion of the rolled material and the work roll diameter of the horizontal rolling mill 51 in all the rolling passes of the rough rolling are used as representative values.

In Invention Example 2, as the operational performance data of the width reduction pressing device 4, the width reduction amount and the feed pitch in the leading end portion of the slab are acquired as representative values. The same operational performance data as in Invention Example 1 is used for the operational performance data of the rough rolling mill 5.

In Invention Example 3, the same data as in Invention Example 1 is used as the operational performance data of the width reduction pressing device 4. In the operational performance data of the rough rolling mill 5, as the operational performance data of the edger 52, the edger opening degree set for the leading end portion of the rolled material and the edger roll diameter in all the rolling passes of the rough rolling are used as representative values. In addition, in the operational performance data of the rough rolling mill 5, as the operational performance data of the horizontal rolling mill 51, the set values of the entry-side sheet width and the delivery-side sheet width of the horizontal rolling mill at the steady portion of the rolled material and the work roll diameter of the horizontal rolling mill 51 in all the rolling passes of the rough rolling are used as representative values.

In the present example, using the width prediction model M generated as described above, 100 data sets having the same category of the steel type of the slab and the dimension of the hot-rolled steel sheet after the finish rolling are selected from 10,000 pieces of test data, and the prediction accuracy of the width distribution thereof is evaluated. Specifically, for the width at each of 200 divided positions in the longitudinal direction of the rough rolled material, the deviation between the actual width and the predicted width by the width prediction model M is calculated, and the average value and the standard deviation of the calculated deviations are obtained. Table 1 indicates the results of the prediction accuracy of the width distribution.

As indicated in Table 1, in Invention Example 1, the average value of the width deviation with respect to the entire length of the rough rolled material is 0.0 mm, and the standard deviation is 1.7 mm, and it is confirmed that high prediction accuracy with respect to the entire length of the rough rolled material can be obtained. In Invention Example 2, the average value of the width deviation with respect to the entire length of the rough rolled material is 0.0 mm, and the standard deviation is 2.3 mm. In Invention Example 2, as the input of the width prediction model M, the width reduction amount and the feed pitch in the leading end portion of the slab as the operational performance data of the width reduction pressing device 4 are used. In this case, it is confirmed that the width distribution can be predicted with relatively high accuracy even in a case where the width reduction amount and the feed pitch in the width reduction pressing device are set differently between the leading end portion of and the steady portion of the slab. In Invention Example 3, the average value of the width deviation with respect to the entire length of the rough rolled material is 0.0 mm, and the standard deviation is 2.6 mm. In Invention Example 3, as the input of the width prediction model M, the edger opening degree set for the leading end portion of the rolled material in all the rolling passes of the rough rolling is used. In this case, it is confirmed that the width distribution can be predicted with relatively high accuracy even in a case where the edger opening degree is set differently between the leading end portion and the steady portion of the slab.

Table 1

| | | Input data of width prediction model | | | Width prediction accuracy | |
| | | Operational parameter of width reduction pressing device | Operational parameter of rough rolling mill | | Average error (mm) | Standard deviation (mm) |
| | | | Edger | Horizontal rolling mill | | |
| Invention Example 1 | | Width reduction amount (steady portion), feed pitch of slab (steady portion) | Edger opening degree (steady portion), edger roll diameter | Entry-side sheet width and delivery-side sheet width (steady portion), work roll diameter | 0.0 | 1.7 |
| Invention Example 2 | | Width reduction amount (leading end portion), feed pitch of slab (leading end portion) | Edger opening degree (steady portion), edger roll diameter | Entry-side sheet width and delivery-side sheet width (steady portion), work roll diameter | 0.0 | 2.3 |
| Invention Example 3 | | Width reduction amount (steady portion), feed pitch of slab (steady portion) | Edger opening degree (leading end portion), edger roll diameter | Entry-side sheet width and delivery-side sheet width (steady portion), work roll diameter | 0.0 | 2.6 |

Although the embodiments to which the invention made by the present inventors is applied have been described above, the present invention is not limited by the description and drawings constituting a part of the disclosure of the present invention according to the present embodiments. That is, other embodiments, examples, operation techniques, and the like made by those skilled in the art based on the present embodiment are all included in the scope of the present invention.

Industrial Applicability

According to the present invention, it is possible to provide the width prediction method of the rough rolled material capable of accurately predicting the width distribution in the longitudinal direction of the rough rolled material. In addition, according to the present invention, it is possible to provide the width control method of the rough rolled material capable of accurately controlling the width in the longitudinal direction of the rough rolled material. In addition, according to the present invention, it is possible to provide the manufacturing method of the hot-rolled steel sheet capable of manufacturing the hot-rolled steel sheet having excellent width accuracy in the longitudinal direction. In addition, according to the present invention, it is possible to provide the generation method of the width prediction model of the rough rolled material capable of generating the width prediction model that accurately predicts the width distribution in the longitudinal direction of the rough rolled material.

Reference Signs List

1 HOT ROLLING LINE
2 HEATING FURNACE
3 DESCALING DEVICE
4 WIDTH REDUCTION PRESSING DEVICE
5 ROUGH ROLLING MILL
6 FINISH ROLLING MILL
7 COOLING DEVICE
8 COILER (WINDING MACHINE)
11 ROUGH DELIVERY-SIDE WIDTH METER
12 FINISH DELIVERY-SIDE WIDTH METER
13 COILER ENTRY WIDTH METER (COILER ENTRY-SIDE WIDTH METER)
14 PASS LINE
15a, 15b, 15c, 15d CAMERA
21 THERMOMETER
22 WALKING BEAM (FIXED SKID)
23 MOVING SKID
41 WIDTH REDUCTION DIE
41a PARALLEL PORTION
41b INCLINED PORTION
42 DRIVING DEVICE
43 PINCH ROLLER
90 CONTROL CONTROLLER
91 CONTROL COMPUTER
92 HOST COMPUTER
100 WIDTH PREDICTION MODEL GENERATION UNIT
101 DATABASE UNIT
102 MACHINE LEARNING UNIT
103 DATA ACQUISITION UNIT
110 WIDTH PREDICTION UNIT
111 INPUT DATA ACQUISITION UNIT
M WIDTH PREDICTION MODEL
SA SLAB
SB STEEL SHEET

**Claims**

1. A width prediction method of a rough rolled material, which predicts a width of the rough rolled material in a hot rolling line including a heating furnace configured to heat a slab, a width reduction pressing device configured to intermittently perform width reduction on the heated slab, a rough rolling mill configured to manufacture the rough rolled material by performing rough rolling on the slab after the width reduction, and a finish rolling mill configured to manufacture a hot-rolled steel sheet by performing finish rolling on the rough rolled material, the width prediction method comprising:

a step of predicting a width distribution in a longitudinal direction of the rough rolled material by using a width prediction model learned by machine learning, the width prediction model for which

an input data is data including one or more operational parameters selected from operational parameters of the width reduction pressing device and one or more operational parameters selected from operational parameters of the rough rolling mill, and
an output data is information on the width distribution in the longitudinal direction of the rough rolled material.

2.  The width prediction method of a rough rolled material according to claim 1, wherein the operational parameter of the width reduction pressing device and the operational parameter of the rough rolling mill are operational parameters specified as representative values in the longitudinal direction of the rough rolled material.

3.  The width prediction method of a rough rolled material according to claim 1 or 2, wherein the width prediction model includes, as the input data, one or more operational parameters selected from operational parameters of the heating furnace.

4.  The width prediction method of a rough rolled material according to any one of claims 1 to 3, wherein the width prediction model includes, as the input data, one or more attribute parameters selected from attribute information of the slab.

5.  A width control method of a rough rolled material, the width control method comprising:

predicting the width distribution in the longitudinal direction of the rough rolled material by using the width prediction method of the rough rolled material according to any one of claims 1 to 4, and
setting the operational parameters of the rough rolling mill on the basis of the predicted width distribution.

6.  A manufacturing method of a hot-rolled steel sheet, the manufacturing method comprising:
manufacturing the hot-rolled steel sheet by performing finish rolling using the finish rolling mill on the rough rolled material of which the width is controlled by the width control method of the rough rolled material according to claim 5.

7.  A generation method of a width prediction model of a rough rolled material, which generates a width prediction model of predicting a width of the rough rolled material in a hot rolling line including a heating furnace configured to heat a slab, a width reduction pressing device configured to intermittently perform width reduction on the heated slab, a rough rolling mill configured to manufacture the rough rolled material by performing rough rolling on the slab after the width reduction, and a finish rolling mill configured to manufacture a hot-rolled steel sheet by performing finish rolling on the rough rolled material, the generation method comprising:
a width prediction model generating step of

acquiring a plurality of pieces of learning data, in which one or more pieces of operational performance data selected from operational parameters of the width reduction pressing device and one or more pieces of operational performance data selected from operational parameters of the rough rolling mill are included as input performance data, and information on a width distribution in a longitudinal direction of the rough rolled material is output performance data, and
generating the width prediction model by machine learning using the plurality of pieces of acquired learning data.

FIG.1

FIG.2

# FIG.3

# FIG.4

42

41

WIDTH
REDUCTION
DIRECTION

41b

41a

43

SLAB CONVEYANCE
DIRECTION

43

SA

WIDTH
REDUCTION
DIRECTION

41

42

# FIG.5

EP 4 596 130 A1

# FIG.6

# FIG.7

# FIG.8

OPERATIONAL PERFORMANCE DATA OF WIDTH REDUCTION PRESSING DEVICE

OPERATIONAL PERFORMANCE DATA OF ROUGH ROLLING MILL

INPUT LAYER L1

HIDDEN LAYER L2

OUTPUT LAYER L3

EP 4 596 130 A1

# FIG.9

# FIG.10

# FIG.11

# FIG.12

| INPUT DATA ACQUISITION UNIT 〔111 | WIDTH PREDICTION UNIT 〔110 |
|---|---|

INPUT DATA ACQUISITION UNIT

OPERATIONAL PERFORMANCE DATA OF WIDTH REDUCTION PRESSING DEVICE

OPERATIONAL PERFORMANCE DATA OF ROUGH ROLLING MILL

OPERATIONAL PERFORMANCE DATA OF HEATING FURNACE

PERFORMANCE DATA OF ATTRIBUTE INFORMATION OF SLAB

WIDTH PREDICTION UNIT

〔M

WIDTH PREDIC-TION MODEL

INFORMATION ON WIDTH DISTRIBUTION IN LONGITUDINAL DIRECTION OF ROUGH ROLLED MATERIAL

# FIG.13

Graph — Y-axis: DIFFERENCE BETWEEN WIDTHS OF STEADY PORTION AND LEADING END PORTION [mm]; X-axis: WIDTH REDUCTION AMOUNT BY WIDTH REDUCTION PRESSING DEVICE [mm]

Legend:
—— WIDTH REDUCTION AMOUNT OF 5 [mm] BY EDGER
········ WIDTH REDUCTION AMOUNT OF 10 [mm] BY EDGER
– – – WIDTH REDUCTION AMOUNT OF 15 [mm] BY EDGER
— — WIDTH REDUCTION AMOUNT OF 20 [mm] BY EDGER

# FIG.14

# FIG.15

# FIG.16

## INTERNATIONAL SEARCH REPORT

| International application No. |
|---|
| **PCT/JP2023/033757** |

| A. | CLASSIFICATION OF SUBJECT MATTER |
|---|---|

***B21B 15/00***(2006.01)i; ***B21B 1/02***(2006.01)i; ***B21B 37/00***(2006.01)i
FI:    B21B37/00 272; B21B1/02 E; B21B15/00 E

According to International Patent Classification (IPC) or to both national classification and IPC

| B. | FIELDS SEARCHED |
|---|---|

Minimum documentation searched (classification system followed by classification symbols)

B21B15/00; B21B1/02; B21B37/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2000-117315 A (TOSHIBA CORP.) 25 April 2000 (2000-04-25)<br>claim 1, fig. 1-2, its related parts | 1-7 |
| Y | JP 2017-42813 A (KOBE STEEL, LTD.) 02 March 2017 (2017-03-02)<br>paragraph [0002] | 1-7 |
| Y | JP 8-300024 A (SUMITOMO METAL IND., LTD.) 19 November 1996 (1996-11-19)<br>paragraph [0002] | 1-7 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 November 2023** | **21 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/033757**

| Patent document cited in search report | | | Publication date (day/month/year) | Patent family member(s) | Publication date (day/month/year) |
|---|---|---|---|---|---|
| JP | 2000-117315 | A | 25 April 2000 | (Family: none) | |
| JP | 2017-42813 | A | 02 March 2017 | (Family: none) | |
| JP | 8-300024 | A | 19 November 1996 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2968647 B
- JP H05200411 A
- JP 3260616 B